# EUROPÄISCHE PATENTSCHRIFT

(11) **EP 2 225 302 B1**
(45) Veröffentlichungstag und Bekanntmachung des Hinweises auf die Patenterteilung: **22.04.2015**
(21) Anmeldenummer: 08864506.4
(22) Anmeldetag: 19.12.2008
(51) Int. Cl.: C08G 18/32, C09J 5/02

(54) **ALDIMIN ENTHALTENDE PRIMERZUSAMMENSETZUNG**
PRIMER COMPOUND CONTAINING ALDIMINE
COMPOSITIONS DE COUCHE PRIMAIRE COMPRENANT DE L'ALDIMINE

(30) Priorität: 21.12.2007 EP 07150316
(43) Veröffentlichungstag der Anmeldung: 08.09.2010
(73) Patentinhaber: Sika Technology AG, 6340 Baar (CH)
(72) Erfinder: BURCKHARDT, Urs, CH-8049 Zürich (CH); HUCK, Wolf-Rüdiger, CH-8044 Gockhausen (CH); SUTTER, Jolanda, CH-4104 Oberwil (CH)
(74) Vertreter: Sika Patent Attorneys
(86) Internationale Anmeldenummer: PCT/EP2008/067973
(87) Internationale Veröffentlichungsnummer: WO 2009/080731

(56) Entgegenhaltungen:
- EP-A- 0 686 654
- EP-A- 0 921 140
- WO-A-03/059978
- WO-A-2007/036574
- US-A- 5 115 086

## Beschreibung

### Technisches Gebiet

Die vorliegende Erfindung betrifft das Gebiet der Primerzusammensetzungen zur Verbesserung der Haftung von Kleb- oder Dichtstoffen auf Substraten.

### Stand der Technik

Polyurethanzusammensetzungen werden schon seit längerem als Primer eingesetzt, um die Haftung von Kleb- und Dichtstoffen auf unterschiedlichen Substraten zu verbessern. Bei der grossen Vielzahl und der ständigen Weiterentwicklung solcher Substrate bedarf es auch immer wieder neuer und spezifischer Primer.

Eine besonders grosse Schwäche der bekannten Primerzusammensetzungen auf Polyurethanbasis ist deren langsame Vernetzung, die zu einem langsamen Festigkeitsaufbau führt. Insbesondere wenn eine Verklebung bereits kurze Zeit nach der Applikation des Primers vorgenommen wird, kann es lange Zeit dauern, bis der Primer vollständig vernetzt ist und damit die Endfestigkeit des Klebeverbundes gewährleisten kann. Insbesondere bei Verklebungen in industriellen Verfahren werden oft rasch abbindende Klebstoffe eingesetzt, die schon kurze Zeit nach der Applikation eine hohe Eigenfestigkeit, die sogenannte Frühfestigkeit, aufweisen. Solche Klebstoffe stellen besonders hohe Ansprüche an die Vernetzungsgeschwindigkeit des Primers, damit sich ihre Frühfestigkeit auf den gesamten Klebeverbund übertragen kann. Andererseits soll der Primer nicht nur schnell vernetzen, sondern auch eine lange Offenzeit aufweisen und somit auch lange nach seiner Applikation, beispielsweise nach mehreren Wochen oder Monaten, noch dauerhaft verklebbar sein, das heisst Haftung zum Klebstoff aufbauen.

Die bekannten Primerzusammensetzungen haben weiterhin eine grosse Schwäche darin, dass sie tendenziell über einen langsamen Haftungsaufbau verfügen, insbesondere bei tiefen Temperaturen und/oder Luftfeuchtigkeiten, klimatischen Bedingungen also, wie sie üblicherweise im Winter häufig angetroffen werden. Dies ist speziell störend, wenn schnell aushärtende oder beschleunigte Klebstoffe- beispielsweise Polyurethanklebstoffe, welchen eine Wasserpaste zugemischt wird - verwendet werden.

Polyurethanzusammensetzungen, welche blockierte Amine, insbesondere in Form von Aldiminen, enthalten, sind schon länger für den Einsatz in Kleb- und Dichtstoffen bekannt. Solche Kleb- und Dichtstoffe zeichnen sich oft durch eine hohe Frühfestigkeit aus, wie beispielsweise beschrieben in WO 03/059978, A1 WO 2004/013200 A1 und WO 2007/036574 A1.

Dokument US 5 115 086 beschreibt Primer die auf feuchtigkeitshärtende Polyurethanprepolymeren basieren. Diese Polyurethanprepolymerprimer werden verwendet als Grundierung für Urethankleb- oder Urethandichtstoffe.

### Darstellung der Erfindung

Aufgabe der vorliegenden Erfindung ist es daher, eine verbesserte Primerzusammensetzung zur Verfügung zu stellen, welche die Nachteile des Standes der Technik behebt.

Überraschenderweise wurde nun gefunden, dass die Verwendung einer Primerzusammensetzung gemäss Anspruch 1 dieses Problem im Stande ist zu lösen.

Die Verwendung dieser Primerzusammensetzung führt dazu, dass ein schneller Haftungsaufbau erfolgt. Dies ist insbesondere auch bei von tiefen Temperaturen und/oder tiefen Luftfeuchtigkeiten, d.h. typischen Winterklimabedingungen, der Fall. Besonders vorteilhaft ist, dass hierdurch jedoch die Offenzeit, d.h. die maximale Zeit bis zur Applikation eines Kleb- oder Dichtstoffes, nicht verkürzt wird. Es hat sich sogar gezeigt, dass bei tiefen Temperaturen und/oder tiefen Luftfeuchtigkeiten die Offenzeit der Primer trotz Verringerung der minimalen Ablüftezeit gegenüber den entsprechenden Primern des Anspruchs 1 ohne Aldimine sogar noch erhöht werden kann. Die Primer haben somit ein bedeutend grösseres Zeitfenster, in dem sie als Primer benutzt werden können. Schliesslich hat sich gezeigt, dass diese vorteilhaften Eigenschaften insbesondere auch bei schnell aushärtenden Klebstoffen vorhanden sind.

Weiterhin bilden ein Verfahren zum Verkleben gemäss Anspruch 10, zum Abdichten gemäss Anspruch 12 sowie ein Artikel gemäss Anspruch 15 weitere Aspekte der Erfindung.

Bevorzugte Ausführungen der Erfindung sind Gegenstand der abhängigen Ansprüche.

### Wege zur Ausführung der Erfindung

In einem ersten Aspekt betrifft die vorliegende Erfindung die Verwendung einer Primerzusammensetzung umfassend
mindestens ein Polyaldimin ALD der Formel (I) 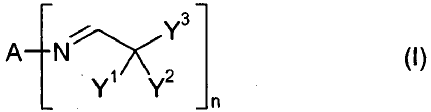 sowie mindestens ein Polyisocyanat P
als Primer für Klebstoffe oder Dichtstoffe.

Hierbei steht A für den Rest eines primären aliphatischen Amins nach der Entfernung von n primären Aminogruppen;
Y¹ und Y² stehen
unabhängig voneinander für einen einwertigen Kohlenwasserstoffrest mit 1 bis 4 C-Atomen
oder
zusammen für einen zweiwertigen Kohlenwasserstoffrest mit 4 bis 5 C-Atomen;
Y³ steht für einen verzweigten oder unverzweigten Kohlenwasserstoffrest mit 1 bis 8 C-Atomen, gegebenenfalls mit cyclischen Anteilen und/oder gegebenenfalls mit mindestens einem Heteroatom, insbesondere Sauerstoff in Form von Ether-, Ester- oder Aldehydgruppen;
und n steht für 2 oder 3.

Bevorzugt stehen Y¹ und Y² je für eine Methylgruppe.

Y³ steht bevorzugt für einen Rest der Formel (II)

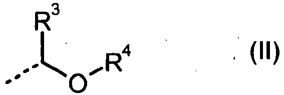

Hierbei steht R³ für ein Wasserstoffatom oder für eine lineare oder verzweigte Alkylgruppe mit 1 bis 4 C-Atomen;
und R⁴ steht entweder
für einen Kohlenwasserstoffrest mit 1 bis 7 C-Atomen
oder
für einen Rest 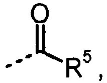 wobei R⁵ für ein Wasserstoffatom oder
für einen Kohlenwasserstoffrest mit 1 bis 6 C-Atomen steht.

Als Polyaldimin ALD der Formel (I) besonders bevorzugt ist das Polyaldimin ALD der Formel (III) 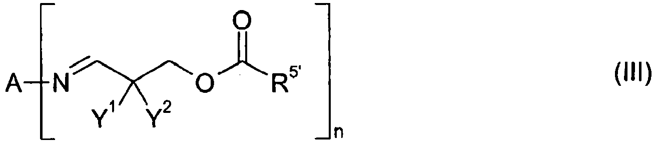 wobei R⁵' für eine Methyl-, Ethyl-, n-Propyl-, *iso*-Propyl-, n-Butyl-, *iso-*Butyl- oder *tert*.-Butylgruppe steht.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst im Weiteren auch sogenannte Prepolymere, das heisst reaktive oligomere Voraddukte, deren funktionelle Gruppen am Aufbau von Makromolekülen beteiligt sind.

Der Begriff "Polyurethanpolymer" umfasst sämtliche Polymere, welche nach dem sogenannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Als "Raumtemperatur" wird eine Temperatur von 25 °C bezeichnet.

Mit "Poly" beginnende Substanznamen wie Polyaldimin, Polyisocyanat, Polyol oder Polyamin bezeichnen im vorliegenden Dokument Substanzen, die formal zwei oder mehr der in ihrem Namen vorkommenden funktionellen Gruppen pro Molekül enthalten.

Der Begriff "primäre Aminogruppe" bezeichnet im vorliegenden Dokument eine NH₂-Gruppe, die an einen organischen Rest gebunden ist, während der Begriff "sekundäre Aminogruppe" eine NH-Gruppe bezeichnet, die an zwei organische Reste, welche auch gemeinsam Teil eines Rings sein können, gebunden ist.

Als "aliphatische Aminogruppe" wird eine Aminogruppe bezeichnet, die an einen aliphatischen, cycloaliphatischen oder arylaliphatischen Rest gebunden ist. Sie unterscheidet sich damit von einer "aromatischen Aminogruppe", welche direkt an einen aromatischen oder heteroaromatischen Rest gebunden ist, wie beispielsweise in Anilin oder 2-Aminopyridin.

Unter einem "Primer" wird im vorliegenden Dokument eine als Voranstrich geeignete Zusammensetzung verstanden, die neben nichtreaktiven flüchtigen Stoffen und optional festen Zuschlägen mindestens eine Substanz mit Isocyanatgruppen enthält und die befähigt ist, bei der Applikation auf einem Substrat zu einem festen, gut haftenden Film in einer Schichtdicke von typischerweise mindestens 5 µm auszuhärten, wobei die Aushärtung durch das Verdampfen der nichtreaktiven flüchtigen Stoffe, wie beispielsweise Lösemittel sowie durch die zur Vernetzung führende chemische Reaktion der Isocyanatgruppen mit Wasser zustande kommt, und welche eine gute Haftung zu einer nachfolgend aufgebrachten Schicht, insbesondere einem Kleb- oder Dichtstoff, aufbaut.

Die gestrichelten Linien in den Formeln in diesem Dokument stellen jeweils die Bindung zwischen einem Substituenten und dem zugehörigen Molekülrest dar.

Ein Polyaldimin **ALD** der Formel (I) ist erhältlich durch eine Kondensationsreaktion unter Abspaltung von Wasser zwischen einem Polyamin der Formel (I a) und einem Aldehyd der Formel (I b). Der Aldehyd der Formel (I b) wird hierbei in Bezug auf die Aminogruppen des Polyamins der Formel (I a) stöchiometrisch oder im stöchiometrischen Überschuss eingesetzt.

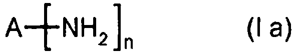

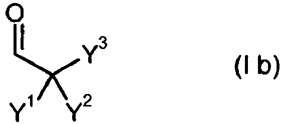

In den Formeln (I a) und (I b) weisen A, n und Y¹, Y² und Y³ die bereits erwähnten Bedeutungen auf.

Geeignete Polyamine der Formel (I a) sind Polyamine mit aliphatischen primären Aminogruppen, beispielsweise die folgenden: Aliphatische Polyamine wie Ethylendiamin, 1,2- und 1,3-Propandiamin, 2-Methyl-1,2-propandiamin, 2,2-Dimethyl-1,3-propandiamin, 1,3- und 1,4-Butandiamin, 1,3- und 1,5-Pentandiamin, 1,6-Hexandiamin, 2,2,4- und 2,4,4-Trimethylhexandiamin und Mischungen davon, 1,7-Heptandiamin, 1,8-Octandiamin, 4-Aminomethyl-1,8-octandiamin, 1,9-Nonandiamin, 1,10-Decandiamin, 1,11-Undecandiamin, 1,12-Dodecandiamin, Methyl-bis-(3-aminopropyl)amin, 1,5-Diamino-2-methylpentan (MPMD), 1,3-Diaminopentan (DAMP), 2,5-Dimethyl-1,6-hexandiamin, cycloaliphatische Polyamine wie 1,3- und 1,4-Diaminocyclohexan, Bis-(4-amino-cyclohexyl)-methan, Bis-(4-amino-3-methylcyclohexyl)-methan, Bis-(4-amino-3-ethyicyclohexyl)-methan, Bis-(4-amino-3,5-dimethylcyclohexyl)-methan, 1-Amino-3-aminomethyl-3,5,5-trimethylcyclohexan (= Isophorondiamin oder IPDA), 2- und 4-Methyl-1,3-diaminocyclohexan und Mischungen davon, 1,3-und 1,4-Bis-(aminomethyl)cyciohexan, 1-Cyclohexylamino-3-aminopropan, 2,5(2,6)-Bis-(aminomethyl)-bicyclo[2.2.1]heptan (NBDA, hergestellt von Mitsui Chemicals), 3(4),8(9)-Bis-(aminomethyl)-tricyclo[5.2.1.0^{2.6}]decan, 1,4-Diamino-2,2,6-trimethylcyclohexan (TMCDA), 3,9-Bis-(3-aminopropyl)-2,4,8,10-tetraoxaspiro[5.5]undecan, 1,3- und 1,4-Xylylendiamin, Ethergruppen-haltige aliphatische Polyamine wie Bis-(2-aminoethyl)ether, 4,7-Dioxadecan-1,10-diamin, 4,9-Dioxadodecan-1,12-diamin und höhere Oligomere davon, Polyoxyalkylen-Polyamine mit zwei oder drei Aminogruppen, beispielsweise erhältlich unter dem Namen Jeffamine^{®} (von Huntsman Chemicals), unter dem Namen Polyetheramin (von BASF) oder unter dem Namen PC Amine^{®} (von Nitroil), sowie Mischungen der vorgenannten Polyamine.

Als Polyamine der Formel (I a) bevorzugt sind Polyamine, welche ausgewählt sind aus der Gruppe bestehend aus 1,6-Hexandiamin, MPMD, DAMP, IPDA, 4-Aminomethyl-1,8-octandiamin, 1,3-Xylylendiamin, 1,3-Bis-(aminomethyl)cyclohexan, Bis-(4-arninocyclohexyl)-methan, Bis-(4-amino-3-methylcyclohexyl)-methan, 3(4),8(9)-Bis-(aminomethyl)-tricyclo[5.2.1.0^{2.6}]-decan, 1,4-Diamino-2,2,6-trimethylcyclohexan und Polyoxyalkylen-Polyamine mit zwei oder drei Aminogruppen, insbesondere die unter dem Handelsnamen Jeffamine^{®} erhältlichen Typen EDR-148, D-230, D-400, T-403 und von Huntsman und dazu analoge Verbindungen von BASF oder Nitroil, sowie deren Mischungen untereinander.

Aldehyde der Formel (I b) sind tertiäre aliphatische oder tertiäre cycloaliphatische Aldehyde, wie beispielsweise Pivalaldehyd (= 2,2-Dimethylpropanal), 2,2-Dimethyl-butanal, 2,2-Diethyl-butanal, 1-Methyl-cyclopentancarboxaldehyd, 1-Methyl-cyclohexancarboxaldehyd; Ether aus 2-Hydroxy-2-methylpropanal und Alkoholen wie Propanol, Isopropanol und Butanol; Ester aus 2-Formyl-2-methylpropionsäure oder 3-Formyl-3-methylbuttersäure und Alkoholen wie Propanol, Isopropanol und Butanol; Ester aus 2-Hydroxy-2-methylpropanal und Carbonsäuren wie Ameisensäure, Essigsäure, Propionsäure, Buttersäure und Isobuttersäure; sowie die im folgenden als besonders geeignet beschriebenen Ether und Ester von 2,2-disubstituierten 3-Hydroxypropanalen, -butanalen oder analogen höheren Aldehyden, insbesondere von 2,2-Dimethyl-3-hydroxypropanal.

Besonders geeignete Aldehyde der Formel (I b) sind in einer Ausführungsform Aldehyde der Formel (II a), das heisst Aldehyde der Formel (I b) mit dem Rest Y³ der Formel (II).

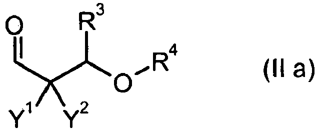

In Formel (II a) stehen Y¹ und Y² jeweils bevorzugt für eine Methylgruppe, und R³ steht bevorzugt für ein Wasserstoffatom.

Aldehyde der Formel (II a) stellen Ether von aliphatischen, arylaliphatischen oder cycloaliphatischen 2,2-disubstituierten 3-Hydroxyaldehyden mit Alkoholen der Formel HO-R⁴ dar. Geeignete 2,2-disubstituierte 3-Hydroxyaldehyde sind ihrerseits erhältlich aus Aldol-Reaktionen, insbesondere gekreuzten Aldol-Reaktionen, zwischen primären oder sekundären aliphatischen Aldehyden, insbesondere Formaldehyd, und sekundären aliphatischen, sekundären arylaliphatischen oder sekundären cycloaliphatischen Aldehyden, wie beispielsweise Isobutyraldehyd, 2-Methylbutyraldehyd, 2-Ethylbutyraldehyd, 2-Methylvaleraldehyd, 2-Ethylcapronaldehyd, Cyclopentancarboxaldehyd, Cyclohexancarboxaldehyd und 1,2,3,6-Tetrahydrobenzaldehyd.

Als Beispiele solcher Aldehyde der Formel (II a) genannt werden sollen 2,2-Dimethyl-3-methoxypropanal, 2 , 2-Dimethyl-3-ethoxypropanal, 2,2-Dimethyl-3-propoxypropanal, 2,2-Dimethyl-3-isopropoxypropanal, 2,2-Dimethyl-3-butoxypropanal und 2,2-Dimethyl-3-hexyloxypropanal.

Besonders geeignete Aldehyde der Formel (I b) sind in einer weiteren Ausführungsform Aldehyde der Formel (III a), insbesondere Aldehyde der Formel (III b), 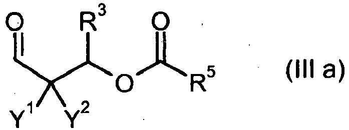 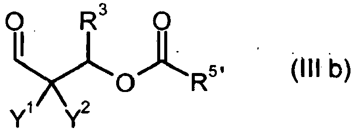 wobei R⁵' für eine Methyl-, Ethyl-, n-Propyl-, *iso*-Propyl-, n-Butyl, iso-Butyl- oder *tert*.-Butylgruppe steht.

Verbindungen der Formel (III a) und (III b) stellen Ester der bereits beschriebenen 2,2-disubstituierten 3-Hydroxyaldehyde, wie beispielsweise 2,2-Dimethyl-3-hydroxypropanal, 2-Hydroxymethyl-2-methyl-butanal, 2-Hydroxy-methyl-2-ethyl-butanal, 2-Hydroxymethyl-2-methyl-pentanal, 2-Hydroxymethyl-2-ethyl-hexanal, 1-Hydroxymethyl-cyclopentancarboxaldehyd, 1-Hydroxy-methyl-cyclohexancarboxaldehyd und 1-Hydroxymethyl-cyclohex-3-encarboxaldehyd, mit geeigneten Carbonsäuren dar.

Beispiele für geeignete Carbonsäuren sind Carbonsäuren wie beispielsweise Ameisensäure, Essigsäure, Propionsäure, Buttersäure, Isobuttersäure, Valeriansäure, Capronsäure, Oenanthsäure, Cyclohexancarbonsäure und Benzoesäure.

In einer bevorzugten Herstellmethode des Aldehyds der Formel (III a) oder (III b) wird ein 2,2-disubstituierter 3-Hydroxyaldehyd, beispielsweise 2,2-Dimethyl-3-hydroxypropanal, welcher beispielsweise aus Formaldehyd (oder Paraformaldehyd) und Isobutyraldehyd, gegebenenfalls in situ, hergestellt werden kann, mit einer Carbonsäure zum entsprechenden Ester umgesetzt. Diese Veresterung kann ohne die Verwendung von Lösemitteln nach bekannten Methoden erfolgen, beschrieben beispielsweise in Houben-Weyl, "Methoden der organischen Chemie", Vol. VIII, Seiten 516 - 528.

Die Primerzusammensetzung enthält weiterhin mindestens ein Polyisocyanat P.

In einer Ausführungsform ist das Polyisocyanat **P** ein monomeres Diisocyanat oder Triisocyanat oder ein Oligomeres eines monomeren Diisocyanates oder Triisocyanates, insbesondere ein Biuret oder ein Isocyanurat eines monomeren Diisocyanates oder Triisocyanates.

Als Polyisocyanat **P** geeignet sind beispielsweise 1,6-Hexamethylendiisocyanat (HDI), 2-Methylpentamethylen-1,5-diisocyanat, 2,2,4- und 2,4,4-Trimethyl-1,6-hexamethylendiisocyanat(TMDI), 1,10-Decamethylendiisocyanat, 1,12-Dodecamethylendiisocyanat, Lysin- und Lysinesterdiisocyanat, Cyclohexan-1,3- und -1,4-diisocyanat und beliebige Gemische dieser Isomeren, 1-Methyl-2,4- und -2,6-diisocyanatocyclohexan und beliebige Gemische dieser Isomeren (HTDI oder H₆TDI), 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI oder H₁₂MDI), 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3- und -1,4-xylylendiisocyanat (m- und p-TMXDI), Bis-(1-Isocyanato-1-methylethyl)-naphthalin, 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Dianisidindiisocyanat (DADI), Tris(p-Isocyanatophenyl)thiophosphat, sowie Oligomere der vorgenannten Isocyanate. Bevorzugt sind MDI, TDI, HDI, IPDI und Tris(p-Isocyanatophenyl)thiophosphat. Besonders bevorzugt sind TDI, HDI und Tris(p-Isocyanatophenyl)thiophosphat.

Als Polyisocyanat **P** geeignet sind in einer weiteren Ausführungsform Isocyanatgruppen aufweisende Additionsprodukte von mindestens einem Polyol und mindestens einem monomeren Diisocyanat oder Triisocyanat, insbesondere den monomeren Diisocyanaten oder Triisocyanaten, welche im vorhergehenden Abschnitt detailliert aufgeführt wurden.

Derartige Additionsprodukte sind insbesondere solche mit Polyolen mit einem Molekulargewicht von weniger als 5000 g/mol, vorzugsweise weniger als 2500 g/mol.

Als Polyol für derartige Additionsprodukte insbesondere geeignet sind:
- Polyetherpolyole, auch Polyoxyalkylenpolyole genannt, welche Polymerisationsprodukte von Ethylenoxid, 1,2-Propylenoxid, 1,2- oder 2,3-Butylenoxid, Oxetan, Tetrahydrofuran oder Mischungen davon sind, eventuell polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.
   Als Polyetherpolyole besonders geeignet sind Polyoxyalkylendiole und -triole, insbesondere Polyoxyalkylendiole. Besonders geeignete Polyoxyalkylendi- und -triole sind Polyoxyethylendi- und -triole sowie Polyoxypropylendi- und -triole. Ebenfalls besonders geeignet sind sogenannte Ethylenoxid-terminierte ("EO-endcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen.
- Polyesterpolyole, welche mindestens zwei Hydroxylgruppen tragen, welche nach bekannten Verfahren, insbesondere der Polykondensation von Hydroxycarbonsäuren oder Lactonen, oder der Polykondensation von aliphatischen und/oder aromatischen Polycarbonsäuren mit zwei- oder mehrwertigen Alkoholen, hergestellt werden.
   Insbesondere geeignet sind Polyesterpolyole, welche hergestellt sind aus zwei- bis dreiwertigen, insbesondere zweiwertigen, Alkoholen, wie beispielsweise Ethylenglykol, Diethylenglykol, Propylenglykol, Dipropylenglykol, Neopentylglykol, 1,4-Butandiol, 1,5-Pentandiol, 3-Methyl-1,5-hexan-diol, 1,6-Hexandiol, 1,8-Octandiol, 1,10-Decandiol, 1,12-Dodecandiol, 1,12-Hydroxystearylalkohol, 1,4-Cyclohexandimethanol, Dimerfettsäurediol (Dimerdiol), Hydroxypivalinsäureneopentylglykolester, Glycerin, 1,1,1-Trimethylolpropan oder Mischungen der vorgenannten Alkohole, mit organischen Di- oder Tricarbonsäuren, insbesondere Dicarbonsäuren, oder deren Anhydride oder Ester, wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid, oder Mischungen der vorgenannten Säuren; sowie Polyesterpolyole aus ε-Caprolacton und Startern wie den vorgenannten zwei- oder dreiwertigen Alkoholen.
   Besonders geeignete Polyesterpolyole sind Polyesterdiole. Insbesondere geeignete Polyesterdiole sind solche hergestellt aus Adipinsäure, Azelainsäure, Sebacinsäure, Dodecandicarbonsäure, Dimerfettsäure, Phthalsäure, Isophthalsäure und Terephthalsäure als Dicarbonsäure und aus Ethylenglykol, Diethylenglykol, Neopentylglykol, 1,4-Butandiol, 1,6-Hexandiol, Dimerfettsäurediol und 1,4-Cyclohexandimethanol als zweiwertigem Alkohol. Insbesondere geeignet sind auch Polyesterdiole hergestellt aus ε-Caprolacton und einem der vorgenannten zweiwertigen Alkohole als Starter.
- Polycarbonatpolyole, wie sie durch Polykondensation beispielsweise der oben genannten - zum Aufbau der Polyesterpolyole eingesetzten - zwei- oder dreiwertigen Alkohole mit Dialkylcarbonaten, wie Dimethylcarbonat, Diarylcarbonaten, wie Diphenylcarbonat, oder Phosgen zugänglich sind. Besonders geeignet sind Polycarbonatdiole, insbesondere amorphe Polycarbonatdiole.
- Mindestens zwei Hydroxylgruppen tragende Blockcopolymere, welche mindestens zwei verschiedene Blöcke mit Polyether-, Polyester- und/oder Polycarbonatstruktur der oben beschriebenen Art aufweisen.
- Niedrigmolekulare zwei- oder mehrwertige Alkohole, wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, niedrigmolekulare Alkoxylierungsprodukte der vorgenannten zwei- und mehrwertigen Alkohole.

Das Molekulargewicht des Polyisocyanats **P,** beträgt vorzugsweise weniger als 4000 g/mol, insbesondere weniger als 2000 g/mol, meist bevorzugt weniger als 1000 g/mol.

Als Additionsprodukte bevorzugt sind Additionsprodukte von Glycerin, 1,1,1-Trimethylolpropan und Pentaerythrit mit monomeren Diisocyanaten, insbesondere mit TDI. Als Additionsprodukt besonders bevorzugt ist das kommerzielle Produkt Desmodur^{®} L75 (von Bayer).

Vorzugsweise handelt es sich beim genannten monomeren Diisocyanat oder Triisocyanat um ein aromatisches Polyisocyanat.

Bevorzugt ist das genannte monomere Diisocyanat oder Triisocyanat ausgewählt aus der Gruppe bestehend aus 2,4- und 2,6-Toluylendiisocyanat und beliebige Gemische dieser Isomeren (TDI), 4,4'-, 2,4'- und 2,2'-Diphenyl-methandiisocyanat und beliebige Gemische dieser Isomeren (MDI) und Tris(p-Isocyanatophenyl)thiophosphat.

Als Polyisocyanat **P** geeignet ist in einer weiteren Ausführungsform eine bei Raumtemperatur flüssige Form von polymerem MDI (PMDI). Als polymeres MDI oder PMDI werden Gemische aus MDI und MDI-Homologen bezeichnet. Kommerziell erhältliche Typen von PMDI sind beispielsweise Desmodur^{®} VL, Desmodur^{®} VL 50, Desmodur^{®} VL R 10, Desmodur^{®} VL R 20 und Desmodur^{®} VKS 20 F (von Bayer), Lupranat^{®} M 10 R und Lupranat^{®} M 20 R (von BASF), Isonate^{®} M 309, Voranate^{®} M 229 und Voranate M^{®} 580 (von Dow) sowie Suprasec^{®} 5025, Suprasec^{®} 2050 und Suprasec^{®} 2487 (von Huntsman).

Die Menge des Polyaldimines **ALD** der Formel (I) in der Primerzusammensetzung ist vorzugsweise so gewählt, dass das Verhältnis von in der Primerzusammensetzung befindlichen Aldiminogruppen zu Isocyanatgruppen 0.05 bis 1, insbesondere 0.1 bis 0.3, beträgt.

Die Primerzusammensetzung enthält weiterhin bevorzugt mindestens ein Lösungsmittel. Als Lösungsmittel werden insbesondere Ether, Ketone, Ester oder Kohlenwasserstoffe, bevorzugt Tetrahydrofuran, Methylethylketon, Aceton, Hexan, Heptan, Xylol, Toluol oder Acetate, insbesondere Methylacetat, Ethylacetat oder Butylacetat, verwendet.

Besonders geeignet sind einerseits Lösungsmittel, welche einen Siedepunkt bei Normdruck von 100 °C oder tiefer aufweisen.

Andererseits kann es in gewissen Fällen, wenn es zum Beispiel darum geht, VOC-freie Primer oder VOC-reduzierte Primer zu formulieren, vorteilhaft sein, wenn das verwendete Lösungsmittel einen Siedepunkt von grösser als 250 °C bei Normdruck oder einem Dampfdruck von weniger als 0.1 mbar bei 20 °C aufweist. Derartige Lösungsmittel gelten nicht als VOC-Lösungsmittel (VOC = Volatile Organic Compounds). Derartige Lösungsmittel sind insbesondere ausgewählt aus der Gruppe bestehend aus Ethern, Estern, Kohlenwasserstoffen, Ketonen, Aldehyden und Amiden.

Als Ether sind insbesondere Alkoxy-abgeschlossene Polyole, insbesondere Alkoxy-abgeschlossene Polyoxyalkylenpolyole, auch Alkoxyterminierte Polyetherpolyole, genannt. Beispiele hierfür sind Polypropylenglykol-Dialkylether oder Polyethylenglykol-Dialkylether. Beispiele hierfür sind Tetraglyme (Tetraethylenglykoldimethylether), Pentaglyme (Pentaethylenglykoldimethylether), Hexaglyme (Hexaethylenglykoldimethylether), Polyethylenglykoldimethylether, beispielsweise wie sie von Clariant unter den Namen Polyglykol DME 200 oder Polyglykol DME 250 kommerziell vertrieben werden, Diethylenglykoldibutylether, Polypropylenglykoldimethylether, Polyproproylenglykoldibutylether, Polyethylenglykolmonomethylethermonoacetat und Polypropylenglykolmonomethylethermonoacetat. Polypropylenglykol-Diether haben gegenüber den entsprechenden Polyethylenglykol-Diether den Vorteil, dass sie typischerweise über ein besseres Lösungsverhalten verfügen sowie bei höheren Molekulargewichten noch flüssig sind.

Als Ester insbesondere geeignet sind Ester der Kohlensäure oder von Monocarbonsäuren oder Polycarbonsäuren. Als Ester der Kohlensäure sind insbesondere die Dialkylcarbonate zu nennen.

Als Ester von Monocarbonsäuren sind vor allem Ester von niedermolekularen Monocarbonsäuren, insbesondere C₁- bis C₆-Carbonsäuren, mit Fettalkoholen sowie Ester von niedermolekularen Alkoholen, insbesondere C₁- bis C₆-Alkoholen, mit Fettsäuren zu nennen. Beispiele hierfür sind Laurinsäuremethylester, Laurinsäureethylester, Myrstinsäuremethylester und Laurylacetat.

Weiterhin sind Ester von Carbonsäuren mit Polyethylenglykolen oder Polypropylenglykolen geeignet.

Weiterhin geeignete Ester sind organische Phosphonate und Phosphate.

Weiterhin geeignet sind cyclische Ester, d.h. Lactone.

Als Amide sind insbesondere Fettsäureamide oder cyclische Amide, d.h. Lactame, geeignet.

Weiterhin enthält die Primerzusammensetzung gegebenenfalls Weichmacher. Insbesondere sind die Weichmacher ausgewählt aus der Gruppe bestehend aus Phthalsäureestern, Estern von aliphatischen Dicarbonsäuren, Fettsäureestern und organischen Phosphorsäureestern. Als Phthalsäureester sind insbesondere die Dialkylphthalate, vorzugsweise der C₈-bis C₁₆-Alkohole, insbesondere Dioctylphthalat (DOP), Diisononylphthalat (DINP) und Diisodecylphthalat (DIDP), geeignet. Geeignete Ester von aliphatischen Dicarbonsäuren sind insbesondere die Ester von Adipinsäure, Azelainsäure und Sebacinsäure, beispielsweise Dioctyladipat (DOA), Diisodecyladipat (DIDA), Dioctylazelat (DOZ) und Dioctylsebacat (DOS).

Es ist jedoch in den meisten Fällen bevorzugt, wenn leicht flüchtige Lösungsmittel verwendet werden und nicht Weichmacher oder VOC-freie Lösungsmittel.

Weiterhin kann die Primerzusammensetzung zusätzlich mindestens ein Organoalkoxysilan, im Folgenden "Silan" genannt, als Haftvermittler enthalten. Beispiele für geeignete Silane sind Aminosilane, Epoxysilane, Vinylsilane, (Meth)acrylsilane, Isocyanatosilane, Carbamatosilane, S-(Alkylcarbonyl)-mercaptosilane und Aldiminosilane; oligomere Formen dieser Silane; sowie Addukte von Aminosilanen und/oder Mercaptosilanen mit Polyisocyanaten, sowie Addukte von Epoxysilanen mit Aminosilane und/oder mit Mercaptosilanen.

Als Silan geeignet sind insbesondere Organoalkoxysilane der Formel (VII).

R⁵-Si(R⁶)ₐ(OR⁷)₃₋ₐ (VII)

Der Rest R⁵ steht hierbei für einen Alkylrest mit mindestens einer funktionellen Gruppe, insbesondere einer Epoxy-, (Meth)acrylatester-, Amin- oder Vinyl-Gruppe. Besonders vorteilhaft ist eine Methylengruppe oder Propylengruppe, welche eine funktionelle Gruppe trägt. Der Rest R⁶ steht für einen Alkylrest mit 1 bis 6 C-Atomen, insbesondere für Methyl, und der Rest R⁷ steht für einen Alkylrest mit 1 bis 4 C-Atomen, insbesondere für Methyl oder Ethyl. Der Index a steht für einen Wert von 0, 1 oder 2, insbesondere für einen Wert von 0.

Beispiele von besonders geeigneten Silanen der Formel (VII) sind:
- 3-Aminopropyl-trimethoxysilan, 3-Aminopropyl-dimethoxymethylsilan, 3-Amino-2-methylpropyl-trimethoxysilan, 4-Aminobutyl-trimethoxysilan, 4-Aminobutyl-dimethoxymethylsilan, 4-Amino-3-methylbutyl-trimethoxysilan, 4-Amino-3,3-dimethylbutyl-trimethoxysilan, 4-Amino-3,3-dimethylbutyl-dimethoxymethylsilan, 2-Aminoethyl-trimethoxysilan, 2-Aminoethyl-dimethoxymethylsilan, Aminomethyl-trimethoxysilan, Aminomethyl-dimethoxymethylsilan, Aminomethylmethoxydimethylsilan, N-(2-Aminoethyl)-3-aminopropyl-trimethoxysilan, 3-[2-(2-Aminoethylamino)-ethylamino]-propyl-trimethoxysilan, N-(2-Aminoethyl)-3-aminopropyl-trimethoxysil an, Bis (trimethoxysilylpropyl)-amin, sowie deren Analoga mit Ethoxy- oder Isopropoxygruppen anstelle der Methoxygruppen am Silicium;
- 3-Mercaptopropyl-trimethoxysilan und 3-Mercaptopropyl-triethoxysilan;
- 2-(3,4-Epoxycyclohexyl)-ethyl-trimethoxysilan, 2-(3,4-Epoxycyclohexyl)-ethyl-triethoxysilan, 3-Glycidyloxypropyl-triethoxysilan und 3-Glycidyloxy-propyl-trimethoxysilan;
- 3-(Meth)acryloxypropyltriethoxysilan, 3-(Meth)acryloxypropyltrimethoxysilan, Vinyltrimethoxysilan und Vinyltriethoxysilan.

Falls Silane vorhanden sind beträgt deren Anteil an der gesamten Primerzusammensetzung vorzugsweise 0.01 - 30 Gew.-%, insbesondere 0.1 - 20 Gew.-%, bevorzugt 0.2 - 10 Gew.-%.

Weiterhin kann die Primerzusammensetzung Organo-Titanverbindungen und/oder Organo-Zirconiumverbindungen als weitere Haftvermittler enthalten.

Bevorzugt trägt die Organo-Titanverbindung mindestens eine Gruppe, welche unter dem Einfluss von Wasser hydrolysiert und zur Bildung einer Ti-OH Gruppe führt. Bevorzugt trägt eine solche Organo-Titanverbindung mindestens eine funktionelle Gruppe, welche ausgewählt ist aus der Gruppe umfassend Alkoxygruppen, Sulfonatgruppen, Carboxylatgruppen, Acetylacetonat, und Kombinationen davon, und welche über eine Sauerstoff-Titan-Bindung direkt an das Titanatom gebunden sind.

Als Alkoxygruppen haben sich insbesondere sogenannte Neoalkoxy-Substituenten, insbesondere der folgenden Struktur, als besonders geeignet erwiesen:

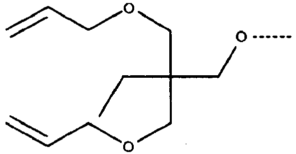

Als Sulfonsäuren haben sich insbesondere alkylsubstituierte aromatische Sulfonsäuren, insbesondere p-Dodecylbenzolsulfonsäure, als besonders geeignet erwiesen. Als Carboxylatgruppen haben sich insbesondere Fettsäurecarboxylate als besonders geeignet erwiesen. Als bevorzugtes Carboxylat gilt Decanoat.

Bevorzugt trägt die Organo-Zirconiumverbindung mindestens eine Gruppe, welche unter dem Einfluss von Wasser hydrolysiert und zur Bildung einer Zr-OH Gruppe führt. Bevorzugt trägt eine solche Organo-Zirconiumverbindung mindestens eine funktionelle Gruppe, welche ausgewählt ist aus der Gruppe umfassend Alkoxygruppen, Sulfonatgruppen, Carboxylatgruppen, Phosphat und Kombinationen davon, und welche über eine Sauerstoff-Zirconium-Bindung direkt an das Zirconiumatom gebunden sind.

Als Alkoxygruppen haben sich insbesondere Isopropoxy- und sogenannte Neoalkoxy-Substituenten, insbesondere die auch bei den Organo-Titanverbindungen abgebildete Struktur, als besonders geeignet erwiesen. Als Sulfonsäuren haben sich insbesondere alkylsubstituierte aromatische Sulfonsäuren, insbesondere p-Dodecylbenzolsulfonsäure, als besonders geeignet erwiesen. Als Carboxylatgruppen haben sich insbesondere Fettsäurecarboxylate als besonders geeignet erwiesen. Als bevorzugtes Carboxylat gilt Stearat.

Organo-Titanverbindungen und Organo-Zirconiumverbindungen sind kommerziell breit erhältlich, beispielsweise bei Kenrich Petrochemicals oder bei DuPont, beispielsweise die Produkte NZ 38J, NZ TPPJ, KZ OPPR, KZ TPP, NZ 01, NZ 09, NZ 12, NZ38, NZ 44, NZ 97 von Kenrich Petrochemicals, Ken-React^{®} KR TTS, KR 7, KR 9S, KR 12, KR 26S, KR 33DS, KR 38S, KR 39DS, KR44, KR 134S, KR 138S, KR 158FS, KR212, KR 238S, KR 262ES, KR 138D, KR 158D, KR238T, KR 238M, KR238A, KR238J, KR262A, LICA 38J, KR 55, LICA1, LICA 09, LICA 12, LICA 38, LICA 44, LICA 97, LICA 99, KR OPPR, KROPP2 von Kenrich Petrochemicals und Tyzor^{®} ET, TPT, NPT, BTM AA, AA-75, AA-95, AA-105, TE, ETAM, OGT von DuPont.

Falls Organo-Titanverbindungen und/oder Organo-Zirconiumverbindungen vorhanden sind beträgt deren Anteil an der gesamten Primerzusammensetzung beträgt vorzugsweise 0.01 - 30 Gew.-%, insbesondere 0.1 - 20 Gew.-%, bevorzugt 0.2 -10 Gew.-%.

Weiterhin enthält die Primerzusammensetzung typischerweise mindestens einen Typ von Russ, insbesondere industriell hergestellten Russ (Carbon Black; im Folgenden als "Russ" bezeichnet). Der Anteil von Russ an der gesamten Primerzusammensetzung beträgt vorzugsweise 2 - 20 Gew.-%, insbesondere 2 -15 Gew.-%, bevorzugt 5 -10 Gew.-%.

Die Primerzusammensetzung kann weitere Bestandteile, wie beispielsweise Katalysatoren, Trocknungsmittel, Thixotropiermittel, Dispergiermittel, Netzmittel, Korrosionsinhibitoren, weitere Haftvermittler, UV- und Hitzestabilisatoren, Pigmente, Farbstoffe und UV-Indikatoren, umfassen.

Katalysatoren sind einerseits solche, welche die Reaktion der Isocyanatgruppen mit Wasser beschleunigen. Insbesondere sind dies Metallverbindungen, beispielsweise Organozinnverbindungen wie Dibutylzinndiacetat, Dibutylzinndilaurat, Dibutylzinndichlorid, Dibutylzinndiacetylacetonat und Dioctylzinndilaurat, Bismutverbindungen wie Bismuttrioctoat und Bismut-tris(neodecanoat), und tertiäre Aminogruppen enthaltende Verbindungen wie 2,2'-Dimorpholinodiethylether und 1,4-Diazabicyclo[2.2.2]octan.

Katalysatoren sind anderseits solche, welche die Hydrolyse der Aldiminogruppen beschleunigen. Dies sind insbesondere Säuren oder zu Säuren hydrolysierbare Verbindungen, beispielsweise organische Carbonsäuren wie Benzoesäure, Salicylsäure oder 2-Nitrobenzoesäure, organische Carbonsäureanhydride wie Phthalsäureanhydrid, Hexahydrophthalsäureanhydrid und Hexahydromethylphthalsäureanhydrid, Silylester von organischen Carbonsäuren, organische Sulfonsäuren wie Methansulfonsäure, p-Toluolsulfonsäure oder 4-Dodecylbenzolsulfonsäure, Sulfonsäureester, andere organische oder anorganische Säuren, oder Mischungen der vorgenannten Säuren und Säureester.

Besonders bevorzugt enthält die Primerzusammensetzung eine Carbonsäure, wie Benzoesäure oder Salicylsäure, und/oder eine Zinnverbindung und/oder eine Bismutverbindung als Katalysator.

Weiterhin kann die Primerzusammensetzung mindestens ein Bindemittel enthalten. Falls Bindemittel vorhanden sind beträgt deren Anteil Bindemittel an der gesamten Primerzusammensetzung vorzugsweise 5 - 50 Gew.-%, insbesondere 10 - 30 Gew.-%, bevorzugt 15 - 25 Gew.-%.

Als Bindemittel geeignet sind insbesondere Polyesterharze, Epoxidharze, Poly(meth)acrylatharze, Polyvinylacetate und Polyvinylacetale.

Die beschriebene Primerzusammensetzung eignet sich als Voranstrich für Klebstoffe und/oder Dichtstoffe. Durch Verwendung eines derartigen Voranstrichs wird die Haftung des Kleb- oder Dichtstoffs auf dem Substrat verbessert.

Der Klebstoff und/oder Dichtstoff ist insbesondere ein Klebstoff, welcher feuchtigkeitsreaktive Gruppen wie Alkoxysilangruppen und/oder Isocyanatgruppen enthält. Derartige Klebstoffe vernetzen unter dem Einfluss von Wasser, insbesondere von Luftfeuchtigkeit, und härten dadurch aus.

Der Klebstoff oder Dichtstoff ist vorzugsweise ein feuchtigkeitshärtender Polyurethanklebstoff. Solche Klebstoffe enthalten Isocyanatgruppen aufweisende Polyurethanpolymere, bzw. -prepolymere, welche insbesondere aus Polyolen und Polyisocyanaten herstellbar sind. Besonders bevorzugt sind einkomponentige feuchtigkeitsreaktive Klebstoffe. Bevorzugte Klebstoffe sind einkomponentige Polyurethanklebstoffe, wie sie unter der Produktelinie Sikaflex^{®} von Sika Schweiz AG kommerziell vertrieben werden.

Es hat sich gezeigt, dass die beschriebene Primerzusammensetzung insbesondere geeignet ist für Klebstoffe oder Dichtstoffe, welche ein Aldimin enthalten. Die im Kleb- oder Dichtstoff vorhandenen Aldimine können Polyaldimine ALD der Formel (I) sein. Besonders vorteilhaft sind jedoch die in WO 2004/013200 A1 beschriebenen Aldimine.

Der Polyurethanklebstoff oder Polyurethandichtstoff enthält bevorzugt ein Polyaldimin ALD2 der Formel (IV) oder (V).

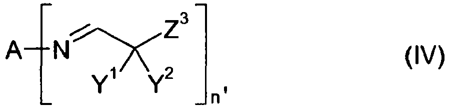

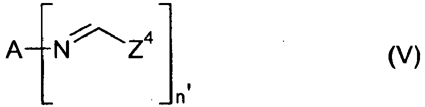

Hierbei steht Z³ für einen linearen oder verzweigten Kohlenwasserstoffrest mit 1 bis 31 C-Atomen, gegebenenfalls mit cyclischen und/oder aromatischen Anteilen und/oder gegebenenfalls mit mindestens einem Heteroatom, insbesondere mit Sauerstoff in Form von Ether-, Ester-, oder Aldehydgruppen. Insbesondere steht Z³ für einen Rest der Formel (VI a) oder (VI b).

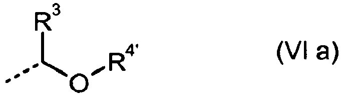

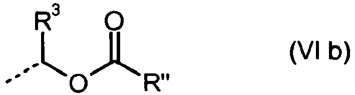

R^{4'} steht hierbei für einen, gegebenenfalls Heteroatome aufweisenden, Kohlenwasserstoffrest mit 1 bis 30, insbesondere mit 11 bis 30, C-Atomen. R" steht entweder für ein Wasserstoffatom oder für einen linearen oder verzweigten Kohlenwasserstoffrest mit 1 bis 29, insbesondere mit 11 bis 29, C-Atomen, welcher gegebenenfalls cyclische Anteile und/oder mindestens ein Heteroatom aufweist oder für einen einfach oder mehrfach ungesättigten, linearen oder verzweigten Kohlenwasserstoffrest mit 5 bis 29 C-Atomen steht; oder für einen, gegebenenfalls substituierten, aromatischen oder heteroaromatischen 5- oder 6-gliedrigen Ring steht.

Weiterhin steht Z⁴ für eine substituierte oder unsubstituierte Aryl- oder Heteroaryl-Gruppe, welche eine Ringgrösse zwischen 5 und 8, bevorzugt 6, Atomen aufweist, und n' steht für 2 oder 3 oder 4.

Die Möglichkeiten für die Reste A, Y¹, Y² und R³ im Polyaldimin **ALD2** der Formel (IV) oder (V) sind so, wie sie bereits für das Polyaldimin **ALD** der Formel (I) definiert worden sind. Es ist dabei jedoch zu beachten, dass die individuell ausgewählten Reste für Polyaldimin **ALD2** nicht dieselben sein müssen, wie sie für das Polyaldimin **ALD** ausgewählt sind. So kann zum Beispiel die Primerzusammensetzung ein Polyaldimin **ALD** der Formel (I) enthalten, in welcher Y¹ für eine Methylgruppe steht, während der Klebstoff ein Polyaldimin **ALD2** der Formel (IV) oder (V) enthält, bei welchem Y¹ für eine Ethylgruppe steht.

Als Polyaldimin **ALD2** bevorzugt sind Polyaldimine **ALD2** der Formel (IV). Beispiele für besonders bevorzugte Aldimine sind Aldimine der Aldehyde, welches Veresterungsprodukte aus 2,2-disubstituierten 3-Hydroxyaldehyden, insbesondere ausgewählt aus der Gruppe bestehende aus 2,2-Dimethyl-3-hydroxypropanal, 2-Hydroxymethyl-2-methyl-butanal, 2-Hydroxymethyl-2-ethyl-butanal, 2-Hydroxymethyl-2-methyl-pentanal, 2-Hydroxymethyl-2-ethyl-hexanal, 1-Hydroxymethyl-cyclopentancarboxaldehyd, 1-Hydroxymethyl-cyclohexancarboxaldehyd 1-Hydroxymethyl-cyclohex-3-encarboxaldehyd, 2-Hydroxy-methyl-2-methyl-3-phenyl-propanal, 3-Hydroxy-2-methyl-2-phenyl-propanal und 3-Hydroxy-2,2-diphenyl-propanal, mit einer Carbonsäure bestehend aus Laurinsäure, Tridecansäure, Myristinsäure, Pentadecansäure, Palmitinsäure, Margarinsäure, Stearinsäure, Nonadecansäure, Arachinsäure, Palmitoleinsäure, Ölsäure, Linolsäure, Linolensäure, Elaeostearinsäure, Arachidonsäure, Fettsäuren aus der technischen Verseifung von natürlichen Ölen und Fetten, wie beispielsweise Rapsöl, Sonnenblumenöl, Leinöl, Ölbaumöl, Kokosnussöl, Ölpalmkernöl und Ölpalmöl und technische Gemische von Fettsäuren, welche diese Säuren enthalten. Bevorzugt hierfür eingesetzte Aldehyde 2,2-Dimethyl-3-lauroyloxypropanal, 2,2-Dimethyl-3-myristoyloxypropanal, 2,2-Dimethyl-3-palmitoyloxypropanal und 2,2-Dimethyl-3-stearoyloxypropanal. Besonders bevorzugt ist 2,2-Dimethyl-3-lauroyloxypropanal.

In einer Ausführungsform ist der Klebstoff oder Dichtstoff zweikomponentig und besteht aus den zwei Komponenten **K1** und **K2.**

In einer besonders bevorzugten Ausführungsform des zweikomponentigen Klebstoffs oder Dichtstoffs enthält die Komponente **K1** mindestens ein Polymer mit mindestens zwei Isocyanatgruppen und Komponente **K2** enthält mindestens Wasser. Bevorzugt enthält eine der Komponenten **K1** oder **K2,** insbesondere **K1,** weiterhin ein Aldimin, insbesondere ein Polyaldimin **ALD2** der Formel (IV) oder (V).

Die Applikation der Primerzusammensetzung kann mittels Tuch, Filz, Rolle, Sprühen, Schwamm, Pinsel, Tauchbeschichten oder dergleichen erfolgen und kann sowohl manuell als auch mittels Roboter erfolgen.

Ein weiterer Aspekt der vorliegenden Erfindung betrifft ein Verfahren zum Verkleben von einem Substrat **S1** mit einem Substrat **S2,** welches die Schritte umfasst:
i) Applikation einer Primerzusammensetzung, wie sie vorgängig beschrieben worden ist, auf ein Substrat **S1;**
ii) Ablüften der Primerzusammensetzung;
iii) Applikation eines Polyurethanklebstoffes auf die abgelüftete Primerzusammensetzung, bzw. auf ein Substrat **S2;**
iv) Kontaktieren des auf der Primerzusammensetzung befindlichen Klebstoffes mit einem Substrat **S2,** bzw. des auf dem Substrat **S2** befindlichen Klebstoffes mit der abgelüfteten Primerzusammensetzung, innerhalb der Offenzeit des Klebstoffes;
v) Aushärtung des Klebstoffes.

Das Substrat **S2** besteht aus dem gleichen oder einem unterschiedlichen Material wie das Substrat **S1.**

Die Oberfläche des Substrates **S2** kann bei Bedarf mit einem Primer, insbesondere mit einer vorgängig ausführlich beschriebenen Primerzusammensetzung, vorbehandelt worden sein.

Ein weiterer Aspekt der vorliegenden Erfindung betrifft ein Verfahren zum Abdichten, welches die Schritte umfasst:
i') Applikation einer Primerzusammensetzung, wie sie vorgängig beschrieben worden ist, auf ein Substrat **S1** und/oder **S2;**
ii') Ablüften der Primerzusammensetzung;
iii') Applikation eines Polyurethandichtstoffes zwischen das Substrat **S1** und das Substrat **S2,** so dass der Polyurethandichtstoffes mit dem Substrat **S1** und dem Substrat **S2** in Kontakt steht.

Das Substrat **S2** besteht aus dem gleichen oder einem unterschiedlichen Material wie das Substrat **S1,** oder das Substrat **S1** und Substrat **S2** bilden zusammen ein Stück.

In diesen zwei Verfahren geeignete Substrate **S1** und/oder **S2** sind beispielsweise anorganische Substrate wie Glas, Glaskeramik, Beton, Mörtel, Backstein, Ziegel, Gips und Natursteine wie Granit oder Marmor; Metalle oder Legierungen wie Aluminium, Stahl, Buntmetalle, verzinkte Metalle; organische Substrate wie Leder, Stoffe, Papier, Holz, mit Harz gebundene Holzwerkstoffe, Harz-Texil-Compositewerkstoffe, Kunststoffe wie Polyvinylchlorid (Hart- und Weich-PVC), Acrylonitril-Butadien-Styrol-Copolymere (ABS), SMC (Sheet Moulding Composites), Polycarbonat (PC), Polyamid (PA), Polyester, PMMA, Polyester, Epoxidharze, Polyurethane (PUR), Polyoxymethylen (POM), Polyolefine (PO), insbesondere mittels Plasma, Corona oder Flammen oberflächenbehandeltes Polyethylen (PE) oder Polypropylen (PP), Ethylen/Propylen-Copolymere (EPM) und Ethylen/Propylen-Dien-Terpolymere (EPDM); beschichtete Substrate wie pulverbeschichtete Metalle oder Legierungen; sowie Farben und Lacke, insbesondere Automobillacke.

Die Substrate können bei Bedarf vor dem Applizieren der Zusammensetzung vorbehandelt werden. Derartige Vorbehandlungen umfassen insbesondere physikalische und/oder chemische Reinigungsverfahren, beispielsweise Schleifen, Sandstrahlen, Bürsten oder dergleichen, oder Behandeln mit Reinigern oder Lösemitteln oder das Aufbringen eines Haftvermittlers, einer Haftvermittlerlösung.

Besonders bevorzugt ist das Substrat **S1** und/oder **S2** Glas oder Glaskeramik. Insbesondere stellt das Substrat **S1** und/oder **S2** eine Glasscheibe dar.

Die Möglichkeiten und bevorzugten Ausführungsform für die in diesen Verfahren einsetzbaren Klebstoffe oder Dichtstoffe wurden bereits vorgängig diskutiert.

Aus den beschriebenen Verfahren wird ein Artikel erhalten.

Dieser Artikel ist insbesondere ein Bauwerk, insbesondere ein Bauwerk des Hoch- oder Tiefbaus, oder ein industrielles Gut oder ein Konsumgut, insbesondere ein Fenster, eine Haushaltmaschine, oder ein Transportmittel, insbesondere ein Fahrzeug zu Wasser oder zu Lande, bevorzugt ein Automobil, ein Bus, ein Lastkraftwagen, ein Zug oder ein Schiff, oder ein Anbauteil eines Transportmittels, oder ein Artikel der Möbel-, Textil- oder Verpackungsindustrie.

Es hat sich gezeigt, dass die erfindungsgemässen Primerzusammensetzungen über einen bedeutend schnelleren Haftungsaufbau verfügen, als die entsprechenden Primer ohne Aldimin. Dies ist insbesondere auch bei von tiefen Temperaturen, d.h. <25°C, insbesondere zwischen 0°C und 20°C, und/oder tiefen Luftfeuchtigkeiten, d.h. < 50% rel. Luftfeuchtigkeit, insbesondere zwischen 20 und 45 rel. Luftfeuchtigkeit, d.h. typischen Winterklimabedingungen, der Fall. Diese vorteilhaften Eigenschaften kommen insbesondere bei schnell aushärtenden Klebstoffen zum Tragen.

Besonders vorteilhaft ist, dass hierdurch jedoch die Offenzeit, d.h. die maximale Zeit bis zur Applikation eines Kleb- oder Dichtstoffes nicht verkürzt wird. Es hat sich sogar gezeigt, dass bei tiefen Temperaturen und/oder tiefen Luftfeuchtigkeiten, gegenüber den entsprechenden Primern ohne Primer trotz Verringerung der minimalen Ablüftezeit sogar noch erhöht werden kann. Die beschriebenen Primer haben somit ein bedeutend grösseres Zeitfenster in dem sie als Primer benutzt werden können. Gegenüber Primer mit langkettigen Aldiminen sind weisen die Primer der vorliegenden Erfindung eine verlängere Offenzeit auf. Schliesslich wirken sich die Primerzusammensetzungen nicht negativ auf die Aushärtung der Klebstoffe aus.

### Beispiele

### Beschreibung der Messmethoden

**Infrarotspektren** wurden auf einem FT-IR Gerät 1600 von Perkin-Elmer (horizontale ATR-Messeinheit mit ZnSe-Kristall) gemessen, wobei die Substanzen unverdünnt als Film aufgetragen wurden. Die Absorptionsbanden sind in Wellenzahlen (cm⁻¹) angegeben (Messfenster: 4000-650 cm⁻¹).

Der **Amingehalt** der hergestellten Dialdimine, das heisst der Gehalt an blockierten Aminogruppen in Form von Aldiminogruppen, wurde titrimetrisch bestimmt (mit 0.1N HClO₄ in Eisessig, gegen Kristallviolett) und ist stets angegeben in mmol N/g.

### Polvaldimine

### Polyaldimin A-1

In einem Rundkolben wurden unter Stickstoffatmosphäre 50.0 g (0.35 mol) 3-Acetoxy-2,2-dimethyl-propanal vorgelegt. Unter kräftigem Rühren wurden aus einem Eintropftrichter 55.0 g (0.35 mol N) Polyetheramin (Polyoxypropylen-Triamin mit einem mittleren Molekulargewicht von ca. 475 g/mol; Jeffamine^{®} T-403, Huntsman; Amingehalt 6.29 mmol N/g) langsam zugegeben. Danach wurden die flüchtigen Bestandteile im Vakuum entfernt (10 mbar, 80 °C). Ausbeute: 98.7 g eines farblosen Öls mit einem Amingehalt von 3.50 mmol N/g.
IR (HATR, unverdünnte Substanz; "sh" = Schulter): 2966, 2930, 2868, 1740 (C=O), 1665 (C=N), 1469, 1460, 1394, 1373, 1344sh, 1330sh, 1292sh, 1237, 1149sh, 1103, 1039, 1007, 986, 943sh, 925, 874, 843, 783.

### Polyaldimin A-2

In einem Rundkolben wurden unter Stickstoffatmosphäre 62.5 g (0.22 mol) 2,2-Dimethyl-3-lauroyloxy-propanal vorgelegt. Unter kräftigem Rühren wurden aus einem Eintropftrichter 33.4 g (0.21 mol N) Polyetheramin (Polyoxypropylen-Triamin mit einem mittleren Molekulargewicht von ca. 475 g/mol; Jeffamine^{®} T-403, Huntsman; Amingehalt 6.29 mmol N/g) langsam zugegeben. Danach wurden die flüchtigen Bestandteile im Vakuum entfernt (10 mbar, 80 °C). Ausbeute: 92.1 g eines klaren, blassgelben Öls mit einem Amingehalt von 2.28 mmol N/g.

### Polyaldimin A-3

In einem Rundkolben wurden unter Stickstoffatmosphäre 74.3 g (0.26 mol) destilliertes 2,2-Dimethyl-3-lauroyloxy-propanal vorgelegt. Unter kräftigem Rühren wurden aus einem Eintropftrichter 30.0 g (0.25 mol N) Polyetheramin (Polyoxypropylen-Diamin mit einem mittleren Molekulargewicht von ca. 240 g/mol; Jeffamine^{®} D-230, Huntsman; Amingehalt 8.29 mmol N/g) langsam zugegeben. Danach wurden die flüchtigen Bestandteile im Vakuum entfernt (10 mbar, 80 °C). Ausbeute: 99.5 g eines klaren, blassgelben Öls mit einem Amingehalt von 2.50 mmol N/g.

### Primerzusammensetzungen

Sika® Primer-206 G+P (in Tabelle als "*G*+*P*" bezeichnet) (3.6% NCO) und Sika® Primer-206 OT (in Tabelle als "*OT*" bezeichnet)(4.0%NCO) sind beides bei Sika Schweiz AG kommerziell erhältliche Primer, welche Russ und Polyisocyanat sowie Lösungsmittel enthalten.

Zu 250 Gewichtsteilen dieser Primer wurden unter Rühren unter Inertatmosphäre gemäss Tabelle 1 die Aldimine ***A-1*** und ***A*-2** in der in Tabelle 1 angegeben Menge hinzu gegeben. Die Menge Aldimine ist derart berechnet, dass die Anzahl der aus den Aldimin entstehende Aminogruppe 20 % der vorhandenen NCO-Gruppen ausmacht. Dies kann aus Kenntnis des Aldimingruppen-Gehaltes (vgl. "Amingehalt") der Aldimine berechnet werden.

Die Beispiele ***R1*,** bzw. ***R3*,** entsprechen somit dem Sika® Primer-206 G+P, bzw. Sika® Primer-206 OT, ohne jeglichen Zusatz.

### Testmethoden

Die jeweiligen Primer wurden mittels Pinsel auf Flachglas (Floatglass), welches vor Gebrauch durch Abwischen mit einem Sika®Aktivator, kommerziell erhältlich bei Sika Schweiz AG, getränkten Zellulosetuch (Tela®, Tela-Kimberly Switzerland GmbH) gereingt und 10 Minuten abgelüftet wurde, aufgetragen. Nach dem Verstreichen der in Tabelle 2 angegebenen Ablüftezeit ("AZ") ("10m"=10 Minuten, "1d"= 1 Tag, "7d"= 7 Tage) wurde der angegebene Klebstoff in Form einer Rundraupe mit einer Kartuschenpresse und einer Düse auf die abgelüftete Primerzusammensetzung aufgetragen.

### Klebstoffe

Als Klebstoffe wurde der bei Sika Schweiz AG kommerziell erhältliche Klebstoff Sikaflex^{®}-250 DM-2 ("DM-2") sowie der nachfolgend beschriebene zweikomponentige Klebstoff ***KS-1*** verwendet.

### Klebstoff KS-1

Die erste Komponente wurde wie folgt hergestellt:
In einem Vakuummischer wurden 400 g Polyurethanpolymer ***P-1*,** dessen Herstellung nachfolgend beschrieben ist, 170 g Diisodecylphthalat (DIDP; Palatinol^{®} Z, BASF), 40 g hydrophobe pyrogene Kieselsäure (Aerosil^{®} R972, Degussa), 120 g Russ, 220 g calciniertes Kaolin, 50 g Polyaldimin ***A-3*,** 0.5 g p-Toluolsulfonylisocyanat (Zusatzmittel Tl, Bayer) und 2 g einer Lösung von 5 Gew.-% Salicylsäure in Dioctyladipat bei 40 °C zu einer homogenen Paste vermischt, die Mischung unverzüglich in innenlackierte Aluminiumkartuschen abgefüllt und diese luftdicht verschlossen.

Das Polyurethanpolymer ***P-1*** wurde wie folgt hergestellt:
1300 g Polyoxypropylen-Diol (Acclaim^{®} 4200 N, Bayer; OH-Zahl 28.5 mg KOH/g), 2600 g Polyoxypropylenpolyoxyethylen-Triol (Caradol^{®} MD34-02, Shell; OH-Zahl 35.0 mg KOH/g), 600 g 4,4'-Methylendiphenyldiisocyanat (4,4'-MDI; Desmodur^{®} 44 MC L, Bayer) und 500 g Diisodecylphthalat (DIDP; Palatinol^{®} Z, BASF) wurden bei 80 °C zu einem Prepolymeren mit einem Gehalt an freien Isocyanat-Gruppen von 2.05 Gew.-% umgesetzt.

Die zweite Komponente wurde wie folgt hergestellt:
In einem Vakuummischer wurden 72.7 g Polyurethanpolymer ***P-2*,** dessen Herstellung nachfolgend beschrieben ist, 17.3 g Polyaldimin ***A-3*,** 0.3 g Salicylsäure-Lösung (5 Gew.-% in Dioctyladipat) und 90.0 g Polyethylenglykoldibutylether (Polyglycol BB 300, Clariant; mittleres Molekulargewicht 300) homogen vermischt und auf 60 °C erwärmt. Dazu wurden 61 g Wasser eingerührt und die Mischung bei 60 °C während 20 Minuten gerührt. Darauf wurden 3 g techn. Natrium-dodecylbenzolsulfonat (Rhodacal^{®} DS-10, Rhodia), 3 g Natrium-tallat (Dresinate^{®} TX, Eastman), 1.5 g Triethylamin, 22.5 g Polyethylenglykol-dibutylether (Polyglycol BB 300, Clariant; mittleres Molekulargewicht 300), 15 g hydrophile pyrogene Kieselsäure (Aerosil^{®} 200, Degussa) und 15 g hydrophobe pyrogene Kieselsäure (Aerosil^{®} R972, Degussa) eingerührt. Die erhaltene Paste hatte einen Wassergehalt von ca. 20 Gew.-%.

Das Polyurethanpolymer ***P-2*** wurde wie folgt hergestellt:
4000 g Polyoxypropylen-Diol (Acclaim^{®} 4200 N, Bayer; OH-Zahl 28.5 mg KOH/g) und 520 g 4,4'-Methylendiphenyldiisocyanat (4,4'-MDI; Desmodur^{®} 44 MC L, Bayer) wurden bei 80 °C zu einem Prepolymeren mit einem Gehalt an freien Isocyanatgruppen von 1.86 Gew.-% umgesetzt.

Zur Applikation des Klebstoffs wird die erste Komponente mit der zweiten Komponente im Volumenverhältnis 50:1 gemischt.

### Applikation und Ausprüfung

Die jeweiligen Primerzusammensetzungen wurden mittels Pinsel auf Flachglas (Floatglass), welches vor Gebrauch durch Abwischen mit einem mit Sika^{®} Aktivator, kommerziell erhältlich bei Sika Schweiz AG, getränkten Zellulosetuch (Tela^{®}, Tela-Kimberly Switzerland GmbH) gereingt und 10 Minuten abgelüftet wurde, aufgetragen. Nach dem Verstreichen der in Tabelle 2 angegebenen Ablüftezeit ("AZ") ("10m"=10 Minuten, "1d"= 1 Tag, "7d"= 7 Tage) wurde der angegebene Klebstoff in Form einer Rundraupe mittels einer Kartuschenpistole auf die abgelüftete Primerzusammensetzung aufgetragen, wobei im Fall des Klebstoffs ***KS-1*** die zwei Komponenten mittels eines Statikmischers gemischt wurden.

Die Haftung des Klebstoffes wurde nach der in Tabelle 2 angebenen Aushärtezeit ("t_{Test}") bei 15°C und 30-40% rel. Luftfeuchtigkeit mittels "Raupentest" getestet. Hierbei wird am Ende der Raupe knapp über der Klebefläche eingeschnitten. Das eingeschnittene Ende der Raupe wird mit einer Rundzange festgehalten und vom Untergrund gezogen. Dies geschieht durch vorsichtiges Aufrollen der Raupe auf die Zangenspitze, sowie durch Platzieren eines Schnittes bis auf den blanken Untergrund senkrecht zur Raupenziehrichtung. Die Raupenabziehgeschwindigkeit ist so zu wählen, dass ca. alle 3 Sekunden ein Schnitt gemacht werden muss. Die Teststrecke muss mindestens 8 cm lang sein. Beurteilt wird der nach dem Abziehen der Raupe auf dem Untergrund zurückbleibende Klebstoff (Kohäsionsbruch). Die Bewertung der Hafteigenschaften erfolgt durch Abschätzen des kohäsiven Anteils der Haftfläche:
1 = > 95% Kohäsionsbruch
2 = 75 - 95% Kohäsionsbruch
3 = 25 - 75% Kohäsionsbruch
4 = < 25% Kohäsionsbruch
5 = 0% Kohäsionsbruch (rein adhäsiver Bruch)
"P" bezeichnet in der Wertung eine Ablösung des Primers vom Untergrund,

Testresultate mit Kohäsionsbruchwerten von weniger als 75% gelten als ungenügend.

**Tabelle 1. Verwendete Primer.*GT=Gewichtsteile.**

| | ***R1*** | ***1*** | ***R2*** | ***R3*** | ***2*** | ***R4*** |
|---|---|---|---|---|---|---|
| ***A-1*** | | 12.84 GT* | | | 11.56 GT* | |
| ***A-2*** | | | 21.37 GT* | | | 11.56 GT* |
| *OT* | 250 GT* | 250 GT* | 250 GT* | | | |
| *G+P* | | | | 250 GT* | 250 GT* | 250 GT* |

**Tabelle 2. Haftungen verschiedener Primerzusammensetzungen auf Flachglas.**

| | | ***DM-2*** | | | | ***KS-1*** | | |
|---|---|---|---|---|---|---|---|---|
| | t_{Test}: | 1 Tag | 2 Tage | 5 Tage | 7 Tage | 2 Tage | 5 Tage | 7 Tage |
| | AZ | | | | | | | |
| ***R1*** | 10m | 3 | 3 | 3 | 1 | 5 | 5 | 1 |
| | 1d | 5 | 5 | 2 | 1 | n.m.* | n.m.* | n.m.* |
| | 7d | 5 | 5 | 5 | 5 | 5 | 4P | 1 |
| ***1*** | 10m | 1 | 1 | 1 | 1 | 1 | 1 | 1 |
| | 1d | 1 | 1 | 1 | 1 | n.m.* | n.m.* | n.m.* |
| | 7d | 1 | 1 | 1 | 1 | 1 | 1 | 1 |
| ***R2*** | 10m | 2 | 1 | 1 | 1 | 1 | 1 | 1 |
| | 1d | 1 | 1 | 1 | 1 | n.m.* | n.m.* | n.m.* |
| | 7d | 4 | 2 | 1 | 1 | 2 | 1 | 1 |
| ***R3*** | 10m | 4 | 4 | 2 | 1 | 5P | 4P | 1 |
| | 1d | 4 | 5 | 5 | 1 | n.m.* | n.m.* | n.m.* |
| | 7d | 4 | 5 | 3 | 1 | 2 | 2P | 1 |
| ***2*** | 10m | 1 | 1 | 1 | 1 | 2 | 1 | 1 |
| | 1d | 1 | 1 | 1 | 1 | n.m.* | n.m.* | n.m.* |
| | 7d | 1 | 1 | 1 | 1 | 1 | 1 | 1 |
| ***R4*** | 10m | 1 | 1 | 1 | 1 | 2 | 1 | 1 |
| | 1d | 2 | 1 | 1 | 1 | n.m.* | n.m.* | n.m.* |
| | 7d | 5 | 1 | 1 | 1 | 1 | 1 | 1 |

| | | | | | | | | |
|---|---|---|---|---|---|---|---|---|
| * n.m. = nicht gemessen. | | | | | | | | |

Für die Versuche in Tabelle 3 wurde die Haftung mittels Raupentest nach einer Aushärtezeit von 7 Tagen Klimaraumlagerung ("KL") bei 23 °C und 50% relativer Luftfeuchtigkeit, sowie nach einer anschliessenden Wasserlagerung ("WL") in Wasser bei 23 °C während 7 Tagen, sowie nach einer anschliessend Kataplasma-Lagerung ("CP") bei 70 °C und 100% relativer Luftfeuchtigkeit während 7 Tagen, getestet.

**Tabelle 3. Haftungen von Sikaflex^{®}-250 DM-2 auf unterschiedlichen Primern nach unterschiedlichen Lagerungen.**

| | ***1*** | | | | ***R2*** | | | | ***2*** | | | | ***R4*** | | | |
|---|---|---|---|---|---|---|---|---|---|---|---|---|---|---|---|---|
| AZ[d] | 1 | 30 | 60 | 90 | 1 | 30 | 60 | 90 | 1 | 30 | 60 | 90 | 1 | 30 | 60 | 90 |
| KL | 1 | 1 | 1 | 1 | 1 | 3 | 3 | 3 | 1 | 1 | 1 | 1 | 1 | 3 | 3 | 3 |
| WL | 1 | 1 | 1 | 1 | 1 | 3 | 3 | 3 | 1 | 1 | 1 | 1 | 1 | 3 | 2 | 3 |
| CP | 1 | 1 | 1 | 1 | 1 | 2 | 2 | 3 | 1 | 1 | 1 | 1 | 1 | 1 | 1 | 2 |

Die Ergebnisse der Tabelle 2 zeigen, dass die erfindungsgemässen Beispiele ***1*** und ***2*** gegenüber den Primern **(*R1*** und ***R3***) ohne Polyaldimine zu einer deutlichen Verbesserung der Haftung führen. Bereits nach 10 Minuten Ablüftezeit entsteht hierbei auch in unvorteilhaften Klimabedingungen, wie sie beispielsweise im Winter häufig vorkommen, eine gute Haftung. Diese gute Haftung bleibt auch nach langen Ablüftezeiten (7 Tagen) noch erhalten. Weiterhin ergibt sich aus Tabelle 2, dass bei diesen (kalten, trockenen) Bedingungen die Offenzeit (maximale Ablüftezeit, bei der eine anschliessende Verklebung noch möglich ist) der Beispiele 1 und 2 grösser als 7 Tage ist, während sie bei den Referenz beispielen **(*R1*** bis ***R4*)** kleiner als 1 Tag bzw. kleiner als 7 Tage war.

Die Ergebnisse in Tabelle 3 zeigen, dass sich die erfindungsgemässen Primer ***1*** und ***2*** enthaltend ein Polyaldimin **ALD** gegenüber dem Primer ***R4*** enthaltend ein anderes Polyaldimin eine verbesserte Haftung nach Wasserlagerung und nach sehr langen Ablüftezeiten (60 bzw. 90 Tage) aufweisen.

## Patentansprüche

1. Verwendung einer Primerzusammensetzung umfassend mindestens ein Polyaldimin ALD der Formel (I) 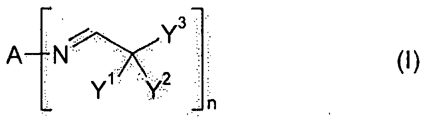 wobei A für den Rest eines primären aliphatischen Amins nach der Entfernung von n primären Aminogruppen steht;
Y¹ und Y²
unabhängig voneinander für einen einwertigen Kohlenwasserstoffrest mit 1 bis 4 C-Atomen stehen,
oder
zusammen für einen zweiwertigen Kohlenwasserstoffrest mit 4 bis 5 C-Atomen stehen;
Y³ für einen verzweigten oder unverzweigten Kohlenwasserstoffrest mit 1 bis 8 C-Atomen, gegebenenfalls mit cyclischen Anteilen und/oder gegebenenfalls mit mindestens einem Heteroatom, insbesondere Sauerstoff in Form von Ether-, Ester- oder Aldehydgruppen, steht;
n für 2 oder 3 steht;
sowie
mindestens ein Polyisocyanat **P**
als Primer für Klebstoffe oder Dichtstoffe.

2. Verwendung gemäss Anspruch 1, **dadurch gekennzeichnet, dass** Y³ für einen Rest der Formel (II) steht 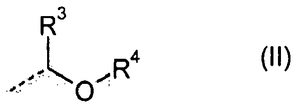 wobei R³ für ein Wasserstoffatom oder für eine lineare oder verzweigte Alkylgruppe mit 1 bis 4 C-Atomen steht;
R⁴ entweder
für einen Kohlenwasserstoffrest mit 1 bis 7 C-Atomen oder
für einen Rest 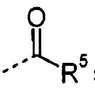 steht, wobei R⁵ für ein Wasserstoffatom
oder für einen Kohlenwasserstoffrest mit 1 bis 6 C-Atomen steht.

3. Verwendung gemäss einem der vorhergehenden Ansprüche, **dadurch gekennzeichnet, dass** das Polyaldimin **ALD** die Formel (III) aufweist 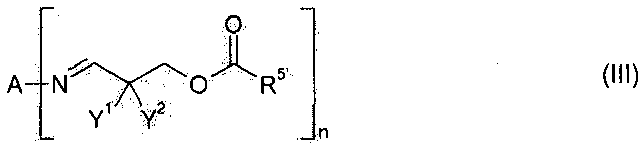 wobei R⁵' für eine Methyl-, Ethyl-, n-Propyl-, *iso*-Propyl-, n-Butyl, *iso-*Butyl- oder *tert*.-Butylgruppe steht.

4. Verwendung gemäss einem der vorhergehenden Ansprüche, **dadurch gekennzeichnet, dass** die Menge des Polyaldimines **ALD** der Formel (I) in der Primerzusammensetzung so gewählt ist, dass das Verhältnis von in der Primerzusammensetzung befindlichen Aldiminogruppen zu Isocyanat-gruppen 0.05 bis 1, insbesondere 0.1 bis 0.3, ist.

5. Verwendung gemäss einem der vorhergehenden Ansprüche, **dadurch gekennzeichnet, dass** die Primerzusammensetzung weiterhin Russ, insbesondere in einer Menge von 2 bis 20 Gew.-%, bevorzugt von 5 bis 10 Gew.-%, enthält.

6. Verwendung gemäss einem der vorhergehenden Ansprüche, **dadurch gekennzeichnet, dass** die Primerzusammensetzung weiterhin eine Carbonsäure, wie Benzoesäure oder Salicylsäure, und/oder eine Zinnverbindung und/oder eine Bismutverbindung als Katalysator enthält.

7. Verwendung gemäss einem der vorhergehenden Ansprüche, **dadurch gekennzeichnet, dass** der Klebstoff oder Dichtstoff ein Polyaldimin enthält.

8. Verwendung gemäss einem der vorhergehenden Ansprüche, **dadurch gekennzeichnet, dass** der Klebstoff oder Dichtstoff ein feuchtigkeitshärtender Polyurethanklebstoff ist.

9. Verwendung gemäss Anspruch 8, **dadurch gekennzeichnet, dass** der Klebstoff zweikomponentig ist und aus zwei Komponenten **K1** und **K2** besteht, wobei die Komponente **K1** mindestens ein Polymer mit mindestens zwei Isocyanatgruppen enthält und die Komponente **K2** mindestens Wasser enthält.

10. Verfahren zum Verkleben von einem Substrat **S1** mit einem Substrat **S2,** welches die Schritte umfasst
i) Applikation einer Primerzusammensetzung, wie sie in einer Verwendung gemäss einem der Ansprüche 1 bis 9 beschrieben ist, auf ein Substrat **S1;**
ii) Ablüften der Primerzusammensetzung;
iii) Applikation eines Polyurethanklebstoffes auf die abgelüftete Primerzusammensetzung, bzw. auf ein Substrat **S2;**
iv) Kontaktieren des auf der Primerzusammensetzung befindlichen Klebstoffes mit einem Substrat **S2,** bzw. des auf dem Substrat **S2** befindlichen Klebstoffes mit der abgelüfteten Primerzusammensetzung, innerhalb der Offenzeit des Klebstoffes ;
v) Aushärtung des Klebstoffes;
wobei das Substrat **S2** aus dem gleichen oder einem unterschiedlichen Material wie das Substrat **S1** besteht.

11. Verfahren gemäss Anspruch 10, **dadurch gekennzeichnet, dass** die Oberfläche des Substrates **S2** mit einem Primer, insbesondere einer Primerzusammensetzung, wie sie in einem Verfahren gemäss einem der Ansprüche 1 bis 9 beschrieben ist, vorbehandelt worden ist.

12. Verfahren zum Abdichten, welches die Schritte umfasst
i') Applikation einer Primerzusammensetzung, wie sie in einer Verwendung gemäss einem der Ansprüche 1 bis 9 beschrieben ist, auf ein Substrat **S1** und/oder **S2;**
ii') Ablüften der Primerzusammensetzung;
iii') Applikation eines Polyurethandichtstoffes zwischen das Substrat **S1** und das Substrat **S2,** so dass der Polyurethandichtstoffes mit dem Substrat **S1** und dem Substrat **S2** in Kontakt steht;
wobei das Substrat **S2** aus dem gleichen oder einem unterschiedlichen Material wie das Substrat **S1** besteht oder wobei das Substrat **S1** und Substrat **S2** ein Stück bilden.

13. Verfahren gemäss Anspruch 10 oder 11 oder 12, **dadurch gekennzeichnet, dass** der Polyurethanklebstoff oder Polyurethandichtstoff ein Polyaldimin aufweist.

14. Verfahren gemäss Anspruch 13, **dadurch gekennzeichnet, dass** der Polyurethanklebstoff oder Polyurethandichtstoff ein Polyaldimin ALD2 der Formel (IV) oder (V) aufweist 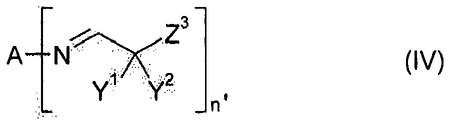 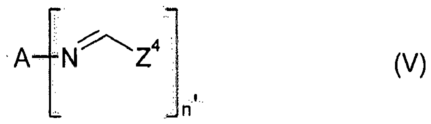 wobei Z³ für einen linearen oder verzweigten Kohlenwasserstoffrest mit 1 bis 31 C-Atomen, gegebenenfalls mit cyclischen und/oder aromatischen Anteilen und/oder gegebenenfalls mit mindestens einem Heteroatom, insbesondere mit Sauerstoff in Form von Ether-, Ester-, oder Aldehydgruppen, steht,
insbesondere für einen Rest der Formel (VI a) oder (VI b) steht, 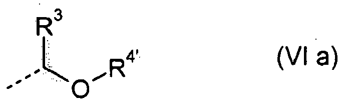 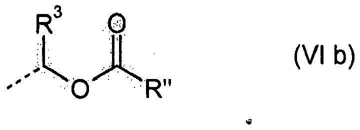 wobei R^{4,}
für einen, gegebenenfalls Heteroatome aufweisenden, Kohlenwasserstoffrest mit 1 bis 30, insbesondere mit 11 bis 30, C-Atomen steht; und
R"
entweder für ein Wasserstoffatom steht;
oder
für einen linearen oder verzweigten Kohlenwasserstoffrest mit 1 bis 29, insbesondere mit 11 bis 29, C-Atomen steht, welcher gegebenenfalls cyclische Anteile und/oder mindestens ein Heteroatom aufweist;
oder
für einen einfach oder mehrfach ungesättigten, linearen oder verzweigten Kohlenwasserstoffrest mit 5 bis 29 C-Atomen steht; oder
für einen, gegebenenfalls substituierten, aromatischen oder heteroaromatischen 5- oder 6-gliedrigen Ring steht;
und wobei Z⁴ für eine substituierte oder unsubstituierte Aryl- oder Heteroaryl-Gruppe, welche eine Ringgrösse zwischen 5 und 8, bevorzugt 6, Atomen aufweist, steht und n' für 2 oder 3 oder 4 steht;
und
A, Y¹, Y² und R³ die für das Polyaldimin **ALD** der Formel (I) in der Verwendung gemäss einem der Ansprüche 1 bis 9 möglichen Bedeutung haben, wobei die Reste A, Y¹, Y², R³ unabhängig von denen für das Polyaldimin der Formel (I) gewählten Resten sind.

15. Artikel, welcher durch ein Verfahren gemäss einem der Ansprüche 10 bis 14 erhalten wird.

## Claims

1. Use of a primer composition comprising
at least one polyaldimine ALD of formula (I) 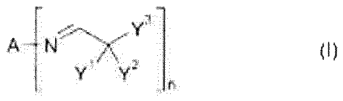 where A is the remainder of a primary aliphatic amine after the removal of n primary amino groups;
Y¹ and Y²
each independently of one another is a monovalent hydrocarbon radical having 1 to 4 C atoms,
or
together represent a divalent hydrocarbon radical having 4 to 5 C atoms;
Y³ is a branched or unbranched hydrocarbon radical having 1 to 8 C atoms, optionally with cyclic moieties and/or optionally with at least one heteroatom, especially oxygen in the form of ether, ester or aldehyde groups; n is 2 or 3;
and
at least one polyisocyanate P
as a primer for adhesives or sealants.

2. Use according to claim 1, **characterized in that** Y³ is a radical of formula (II) 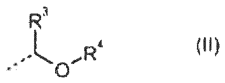 where R³ is a hydrogen atom or a linear or branched alkyl group having 1 to 4 C atoms;
R⁴ is either
a hydrocarbon radical having 1 to 7 C atoms
or
a 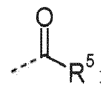 radical, where R⁵ is a hydrogen atom or a hydrocarbon radical having I to 6 C atoms.

3. Use according to one of the preceding claims, **characterized in that** the polyaldimine ALD has formula (III) 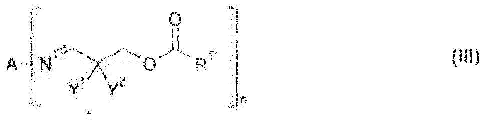 wherein R⁵, is a methyl, ethyl, n-propyl, isopropyl, n-butyl, isobutyl or tert.-butyl group.

4. Use according to one of the preceding claims, **characterized in that** the quantity of the polyaldimine ALD of formula (I) in the primer composition is selected such that the ratio of aldimino groups present in the primer composition to isocyanate groups is 0.05 to 1, especially 0.1 to 0.3.

5. Use according to one of the preceding claims, **characterized in that** the primer composition also contains carbon black, especially in a quantity of 2 to 20 wt%, preferably 5 to 10 wt%.

6. Use according to one of the preceding claims, **characterized in that** the primer composition also contains a carboxylic acid, such as benzoic acid or salicylic acid, and/or a tin compound and/or a bismuth compound as catalyst.

7. Use according to one of the preceding claims, **characterized in that** the adhesive or sealant contains a polyaldimine.

8. Use according to one of the preceding claims, **characterized in that** the adhesive or sealant is a moisture-curing polyurethane adhesive.

9. Use according to claim 8, **characterized in that** the adhesive has two components and consists of two components **K1** and **K2,** wherein component **K1** contains at least one polymer with at least two isocyanate groups and component **K2** contains at least water.

10. Method for bonding a substrate **S1** with a substrate **S2**, which comprises the steps of
i) application of a primer composition, as described in a use according to one of claims 1 to 9, to a substrate **S1**;
ii) ventilating the primer composition;
iii) application of a polyurethane adhesive to the ventilated primer composition or to a substrate **S2**;
iv) Contacting the adhesive present on the primer composition with a substrate **S2** or the adhesive present on the substrate **S2** with the ventilated primer composition, within the open time of the adhesive;
v) Curing the adhesive;
wherein the substrate **S2** consists of the same material as the substrate **S1** or a different material.

11. Method according to claim 10, **characterized in that** the surface of the substrate **S2** has been pretreated with a primer, especially a primer composition as described in a method according to one of claims 1 to 9.

12. Method of sealing comprising the steps of
i') application of a primer composition as described in a use according to one of claims 1 to 9, to a substrate **S1** and/or **S2**;
ii') ventilating the primer composition;
iii')application of a polyurethane sealant between substrate **S1** and substrate **S2**, so that the polyurethane sealant is in contact with substrate **S1** and substrate **S2**;
wherein the substrate **S2** consists of the same material as or a different material from substrate **S1** or wherein substrate **S1** and substrate **S2** form one piece.

13. Method according to claim 10 or 11 or 12, **characterized in that** the polyurethane adhesive or polyurethane sealant contains a polyaldimine.

14. Method according to claim 13, **characterized in that** the polyurethane adhesive or polyurethane sealant contains a polyaldimine ALD2 of formula (IV) or (V) 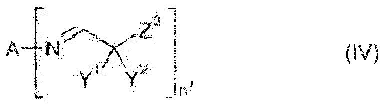 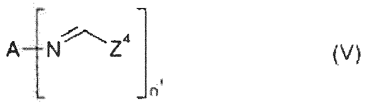 wherein Z³ is a linear or branched hydrocarbon radical with 1 to 31 C atoms, optionally with cyclic and/or aromatic fractions and/or optionally with at least one heteroatom, especially with oxygen in the form of ether, ester or aldehyde groups,
in particular a radical of formula (VI a) or (VI b), 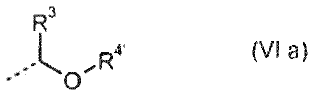 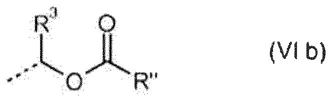 wherein R⁴'
is a hydrocarbon radical, optionally containing heteroatoms, with 1 to 30, especially 11 to 30, C atoms, and
R" is either a hydrogen atom;
or
a linear or branched hydrocarbon radical with 1 to 29, especially 11 to 29, C atoms, which optionally contains cyclic fractions and/or at least one heteroatom;
or
is a singly or multiply unsaturated, linear or branched hydrocarbon radical with 5 to 29 C atoms; or is a 5- or 6-membered ring, aromatic or heteroaromatic, optionally substituted;
and wherein Z⁴ is a substituted or unsubstituted aryl or heteroaryl group, which has a ring size of between 5 and 8, preferably 6, atoms and n' is 2 or 3 or 4;
and
A, Y¹, Y² and R³ have the meaning possible for the polyaldimine **ALD** in the use according to one of claims 1 to 9, wherein the radicals A, Y¹, Y² and R³ are radicals selected independently from those for the polyaldimine of formula (1).

15. Article obtained by a process according to one of claims 10 to 14.

## Revendications

1. Emploi d'une composition de couche primaire contenant au moins une polyaldimide ALD de formule (I) 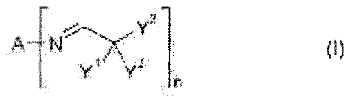 où A représente le reste d'une amine aliphatique primaire après élimination de n groupes amino primaires ;
Y¹ et Y²
chacun, indépendamment des autres, représentant un radical hydrocarbure monovalent comptant 1 à 4 atomes de carbone,
soit
représentant conjointement un radical hydrocarbure divalent comptant 4 à 5 atomes de carbone ;
Y³ représente un radical hydrocarbure ramifié ou non ramifié comptant 1 à 8 atomes de carbone avec des fragments cycliques et/ou éventuellement avec au moins un hétéroatome, en particulier l'oxygène sous la forme de groupes éther, ester ou aldéhyde ;
n vaut 2 ou 3 ;
et
au moins un polyisocyanate **P**
en tant qu'amorce pour des adhésifs ou pour des enduits.

2. Emploi selon la revendication 1, **caractérisé en ce que** Y³ est un radical de formule (II) 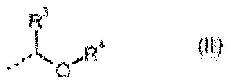 où R³ représente un atome d'hydrogène ou un groupe alkyle linéaire ou ramifié comptant 1 à 4 atomes de carbone ;
R⁴ représente soit
un radical hydrocarbure comptant 1 à 7 atomes de carbone
ou
un 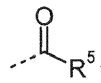 radical, où R⁵ représente un atome d'hydrogène ou un radical d'hydrocarbure comptant 1 à 6 atomes de carbone.

3. Emploi selon l'une des revendications précédentes, **caractérisé en ce que** la polyaldimide ALD a pour formule (III) 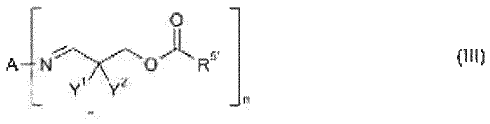 où R⁵, représente un groupe méthyle, éthyle, n-propyle, isopropyle, n-butyle, isobutyle ou tert-butyle.

4. Utilisation selon l'une des revendications précédentes, **caractérisée en ce que** la quantité de polyaldimide **ALD** de formule (I) dans la composition de couche primaire est choisie de sorte que le rapport des groupes aldimido présents dans la composition de couche primaire aux groupes isocyanate va de 0,05 à 1, en particulier de 0,1 à 0.3.

5. Emploi selon l'une des revendications précédentes, **caractérisé en ce que** la composition de couche primaire contient aussi du noir de carbone, en particulier à hauteur de 2 à 20 % en poids, de préférence de 5 à 10 % en poids.

6. Emploi selon l'une des revendications précédentes, **caractérisé en ce que** la composition de couche primaire contient aussi un acide carboxylique tel que l'acide benzoïque ou l'acide salicylique et/ou un composition d'étain et/ou une composition de bismuth en tant que catalyseur.

7. Emploi selon l'une des revendications précédentes, **caractérisé en ce que** l'adhésif ou le joint contient une polyaldimide.

8. Emploi selon l'une des revendications précédentes, **caractérisé en ce que** l'adhésif ou le joint est un adhésif de type polyuréthane durcissant à l'humidité.

9. Emploi selon la revendication 8, **caractérisé en ce que** l'adhésif compte deux composants et est constitué de deux composants **K1** et **K2,** le composant **K1** contenant au moins un polymère comptant au moins deux groupes isocyanate et le composant **K2** contenant au moins de l'eau.

10. Procédé de liaison d'un substrat **S1** à un substrat **S2,** qui comprend les étapes suivantes
i) application d'une composition de couche primaire telle que décrite dans un emploi selon l'une des revendications 1 à 9, à un substrat **S1** ;
ii) ventilation de la composition de couche primaire ;
iii) application d'un adhésif de type polyuréthane à la composition ventilée de couche primaire ou à un substrat **S2 ;**
iv) mise en contact de l'adhésif présent sur la composition de couche primaire avec un substrat **S2** ou de l'adhésif présent sur le substrat **S2** avec la composition de couche primaire ventilée, avec le temps de prise de l'adhésif ;
v) durcissement de l'adhésif ;
le substrat **S2** étant constitué du même matériau que le substrat **S1** ou qu'un matériau différent.

11. Procédé selon la revendication 10, **caractérisé en ce que** la surface du substrat **S2** a été prétraitée avec une amorce, en particulier une composition de couche primaire telle que décrite dans un procédé selon l'une quelconque des revendications 1 à 9.

12. Procédé de scellement comprenant les étapes suivantes
i') application d'une composition de couche primaire comme décrit dans un emploi conforme à l'une des revendications 1 à 9, sur un substrat **S1** et/ou **S2** ;
ii') ventilation de la composition de couche primaire ;
iii')application d'un joint en polyuréthane entre le substrat **S1** et le substrat **S2**, pour que le joint en polyuréthane soit en contact avec le substrat **S1** et avec le substrat **S2** ;
le substrat **S2** étant constitué du même matériau ou d'un matériau différent du substrat **S1** ou le substrat **S1** et le substrat **S2** forment une seule pièce.

13. Procédé selon la revendication 10 ou 11 ou 12, **caractérisé en ce que** l'adhésif de polyuréthane ou le joint de polyuréthane contient une polyaldimine.

14. Procédé selon la revendication 13, **caractérisé en ce que** l'adhésif de polyuréthane ou le joint de polyuréthane contient une polyaldimine **ALD2** de formule (IV) ou (V) 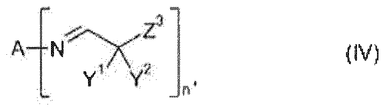 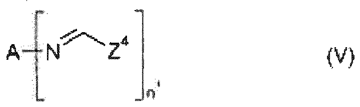 où Z³ représente un radical hydrocarbure linéaire ou ramifié comptant 1 à 31 atomes de carbone, éventuellement avec des fractions cycliques et/ou aromatiques et/ou éventuellement avec au moins un hétéroatome, en particulier avec l'oxygène sous la forme de groupes éther, ester ou aldéhyde,
en particulier un radical de formule (VI a) ou (VI b),
où R⁴'
représente un radical hydrocarbure, contenant éventuellement des hétéroatomes, comptant 1 à 30, en particulier 11 à 30 atomes de carbone, et
où R" représente soit un atome d'hydrogène
soit
un radical hydrocarboné linéaire ou ramifié comptant 1 à 29, en particulier 11 à 29 atomes de carbone, qui contiennent en option des fractions cycliques et/ou au moins un hétéroatome ;
ou
est un radical hydrocarboné insaturé de manière unique ou multiple linéaire ou ramifié comptant 5 à 29 atomes de carbone ; ou est un cycle à 5 ou 6 membres, aromatique ou hétéroaromatique, éventuellement substitué ;
et où Z⁴ représente un groupe aryle ou hétéroaryle substitué ou non substitué, qui a une taille de cycle comprise entre 5 et 8, de préférence 6, atomes, et où n' est 2, 3 ou 4 ;
et
A, y¹, Y² et R³ ont la signification possible pour la polyaldimine **ALD** dans l'emploi conforme à l'une des revendications 1 à 9, les radicaux A, Y¹, Y² et R³ étant des radicaux choisis indépendamment parmi ceux correspondant à la polyaldimine de formule (1).

15. Article obtenu par un procédé conforme à l'une des revendications 10 à 14.
